# EUROPÄISCHE PATENTSCHRIFT

(11) **EP 4 615 609 B1**
(45) Veröffentlichungstag und Bekanntmachung des Hinweises auf die Patenterteilung: **02.09.2026**
(21) Anmeldenummer: 23801430.2
(22) Anmeldetag: 06.11.2023
(51) Int. Cl.: B01D 46/00, B01D 46/12, B01D 46/52, B01D 46/64

(54) **FILTERVORRICHTUNG**
FILTER APPARATUS
APPAREIL DE FILTRATION

(30) Priorität: 08.11.2022 DE 102022129489
(43) Veröffentlichungstag der Anmeldung: 17.09.2025
(73) Patentinhaber: MANN+HUMMEL GmbH, 71636 Ludwigsburg (DE)
(72) Erfinder: GRAD, Johannes, 71636 Ludwigsburg (DE); STARZER, Matthias, 71636 Ludwigsburg (DE); GÜNTNER, Robert, 71636 Ludwigsburg (DE); DEL RIO, Laura, 71636 Ludwigsburg (DE); CABANES CACHO, Juan Antonio, 71636 Ludwigsburg (DE)
(74) Vertreter: Mann + Hummel Intellectual Property
(86) Internationale Anmeldenummer: PCT/EP2023/080834
(87) Internationale Veröffentlichungsnummer: WO 2024/099963

(56) Entgegenhaltungen:
- EP-A1- 3 453 443
- EP-A2- 3 181 210
- CN-A- 110 448 968
- US-A1- 2021 101 102
- US-B1- 6 348 077

## Beschreibung

### Technisches Gebiet

Die vorliegende Erfindung betrifft eine Filtervorrichtung, insbesondere eines Kabinenluftfiltersystems oder eines Ansaugluftfiltersystems einer Brennstoffzelle. Ferner betrifft die Erfindung die Verwendung von Filterelementen in einer solchen Filtervorrichtung.

Die in eine Fahrzeugkabine strömende Luft wird heutzutage möglichst vollständig von Verunreinigungen befreit. Mögliche auftretende Verunreinigungen sind beispielsweise Feinstaub, Pollen, Ruß oder Aerosole. Insbesondere bei Anwendungen, bei welchen hohe Konzentrationen an Pflanzenschutzmitteln oder Flüssigdüngemitteln in der Umgebungsluft bei Verwendung von Sprühgeräten für diese Stoffe auftreten, ist das Filtern derartiger Verunreinigungen wichtig. Es stehen hierfür verschiedene Filtermedien zur Verfügung. Regelmäßig werden beispielsweise Partikelfilter, Aktivkohlefilter und HEPA-Filter eingesetzt. Diese werden in verschiedenen Lagen und verschiedenen Anordnungen kombiniert, um die gewünschte Filterwirkung für die Innenraumluft zu erzielen.

Da in der Praxis Kombinationen von verschiedensten abzuscheidenden Schadstoffen auftreten, hat sich der Ansatz von mehrstufigen Filtersystemen bzw. -elementen etabliert.

Neben der Anwendung von mehrstufigen Filtersystemen bzw. -elementen im Bereich der Kabinenluftfiltration stellt die Filterung der Zuluft zu einem Brennstoffzellensystem ein weiteres Einsatzgebiet dar, da hierbei gleichermaßen hohe Anforderungen an die Aufreinigung der Luft hinsichtlich Partikelfiltration und Schadgasabscheidung gestellt werden. Ferner ist ein Einsatz derartiger mehrstufiger Filtersysteme bzw. -elemente in wasserstoffbetriebenen Verbrennungsmotoren denkbar.

### Stand der Technik

Aus EP 2 939 725 A1 ist ein Kabinenluftfilterelement bekannt, das zwei seriell durchströmbare Filtermediumkörper aufweist, von denen einer eine Gasfilterstufe darstellt und ein anderer eine Partikelfilterstufe, insbesondere mit HEPA-Effizienz. In einem Benutzungszustand wird das Kabinenluftfilterelement in ein fahrzeugfestes Filtergehäuse eingesetzt und von mit Verunreinigungen beladener Luft durchströmt. Nachteilig hieran ist, dass die Filtermediumkörper der Gasfilterstufe und der Partikelfilterstufe nicht unabhängig voneinander ausgetauscht werden können, da diese unlösbar miteinander verbunden sind, insbesondere in einen gemeinsamen Rahmen eingeklebt. Hierdurch ergibt sich unter Umständen eine unvollständige Ausnutzung der Abscheidekapazität eines der Filtermediumkörper.

Ferner ist aus EP 3 453 443 A1 ein Ansaugluftfilter bekannt, der ein Filterelement aufweist, das über einen Filtermediumkörper aus einem gefalteten Partikelfiltermedium verfügt. Das Filterelement weist ferner eine umlaufende Dichtung auf, mit der es dichtend in ein Filtergehäuse eingesetzt ist, so dass eine Einlassseite und eine Auslassseite des Filtergehäuses durch das Filterelement getrennt sind. Nachteilig weist der dort beschriebene Ansaugluftfilter nur eine Filterstufe auf und erlaubt insbesondere keine Schadgasabscheidung.

Aus der EP 3 453 443 A1, der US 6 348 077 B1, der US 2021/101102 A1, der EP 3 181 210 A2 und der CN 110 448 968 A sind weitere gattungsbildende Filterelemente bekannt.

Als Filterelement oder Filtereinsatz werden im Allgemeinen als Einheit auswechselbar in einem Filtergehäuse anordenbare Einsätze verstanden, die mindestens einen Filtermediumkörper aus einem Filtermedium, häufig in Form eines gefalteten Filterbalgs, und üblicherweise auch eine das Filtermedium tragende oder stützende Struktur und meist eine Dichtung umfassen. Das jeweilige Filtermedium weist üblicherweise eine begrenzte Standzeit auf, weshalb Filterelemente regelmäßig ausgetauscht werden müssen.

### Offenbarung der Erfindung

Vor diesem Hintergrund liegt der vorliegenden Erfindung die Aufgabe zugrunde, eine verbesserte Filtervorrichtung zu schaffen, die es erlaubt, ein existierendes - insbesondere einstufiges - Filtersystem zu einem mehrstufigen Filtersystem weiterzubilden, wobei die Filterelemente der einzelnen Filterstufen unabhängig voneinander austauschbar sind.

Diese Aufgabe wird gelöst durch eine Filtervorrichtung mit den Merkmalen des Anspruchs 1 sowie durch jeweils eine Verwendung mit den Merkmalen der Ansprüche 14 und 15.

Weitere Ausgestaltungen der Erfindung sind Gegenstand der Unteransprüche sowie der im Folgenden beschriebenen Ausführungsbeispiele der Erfindung.

Die erfindungsgemäße Filtervorrichtung ist insbesondere zur Verwendung in einem Kabinenluftfiltersystem oder in einem Ansaugluftfiltersystems einer Brennstoffzelle bestimmt. Die Filtervorrichtung umfasst zumindest zwei Filterelemente, die jeweils einen Filtermediumkörper und eine diesen umlaufende Dichtung aufweisen. Ferner umfasst die Filtervorrichtung ein Filtergehäuse mit zumindest zwei Gehäuseteilen, wobei ein erstes Gehäuseteil einen Filterelementaufnahmeraum aufweist, in dem ein erstes Filterelement angeordnet ist. Das erste Gehäuseteil weist zumindest eine umlaufende Gehäusedichtfläche auf, an der eine umlaufende Dichtung des ersten Filterelements dichtend anliegt. Ferner umfasst die Filtervorrichtung einen Adapterrahmen, der einen Filterelementaufnahmeraum aufweist, in dem ein zweites Filterelement angeordnet ist. Der Adapterrahmen weist zumindest eine erste umlaufende Dichtfläche auf, an der eine umlaufende Dichtung des zweiten Filterelements dichtend anliegt und hat ferner eine zweite umlaufende Dichtfläche, an der die umlaufende Dichtung des ersten Filterelements dichtend anliegt. Ein zweites Gehäuseteil der Filtervorrichtung weist eine umlaufende Gehäusedichtfläche auf, an der die umlaufende Dichtung des zweiten Filterelements dichtend anliegt.

Die Filterelemente der erfindungsgemäßen Filtervorrichtung sind als austauschbare Bauteile vorgesehen, die im Servicefall, d.h. bei Erreichung ihrer maximalen Abscheidekapazität, ersetzt werden.

Aufgrund der Verwendung des Adapterrahmens erlaubt es die vorliegende Erfindung, ein bestehendes einstufiges Filtersystem durch einfache Maßnahmen zu einem zwei- oder mehrstufigen Filtersystem weiterzubilden. Der Adapterrahmen stellt hierbei den Aufnahmeraum für ein zusätzliches Filterelement bereit und ermöglicht die Abdichtung der zwei oder mehr Filterelemente gegenüber den zwei Gehäuseteilen. Vorteilhaft sind beide Filterelemente der erfindungsgemäßen Filtervorrichtung separat austauschbar, so dass die Abscheidekapazität beider Filterelemente optimal ausgenutzt werden kann. Mit anderen Worten stellt der Adapterrahmen ein Zwischenstück dar, welches sich im Montagezustand zwischen den beiden Filterelementen befindet. Das erste Filterelement ist hierbei unmittelbar gegenüber dem ersten Gehäuseteil abgedichtet und das zweite Filterelement unmittelbar gegenüber dem zweiten Gehäuseteil abgedichtet. Untereinander werden die beiden Filterelemente hingegen durch den Adapterrahmen abgedichtet. Um dies zu ermöglichen, weist der Adapterrahmen insbesondere eine umlaufende fluiddichte Wand auf, die mit dessen erster und zweiter umlaufender Dichtfläche verbunden ist.

Der Adapterrahmen kann insbesondere ein separates Teil sein und insbesondere unverbunden oder nur lösbar verbunden mit den Filterelementen gekoppelt sein. Der Adapterrahmen kann zum Austausch der Filterelemente der Filtervorrichtung entnommen werden.

In Ausführungen kann die umlaufende Dichtung der Filterelemente ein Kunststoffmaterial, insbesondere ein insbesondere geschäumtes Polyurethan oder ein thermoplastisches Elastomer, umfassen oder daraus bestehen. Vorgenannte Materialien lassen sich hervorragend in einem flüssigen oder pastösen Ausgangszustand bereitstellen und unter Zuhilfenahme einer Gießschale in erfindungsgemäßer Weise unmittelbar stoffschlüssig an die Filtermediumkörper anformen. In der Gießschale härtet das in flüssigem oder pastösem Ausgangszustand bereitgestellte Dichtungsgrundmaterial aus und bildet hiernach den endgültigen Werkstoff der umlaufenden Dichtung aus.

Die Filterelemente können jeweils genau vier Seitenflächen aufweisen und/oder eine quaderförmige Grundform aufweisen. Alternativ können diese aber auch die Form von beliebigen Vielecken haben oder zumindest in Abschnitten gekrümmte Kanten aufweisen und/oder eine Kreisform bzw. Ellipsenform haben.

Insbesondere sind das erste und das zweite Filterelement in Richtung einer vorbestimmten Durchströmungsrichtung seriell durchströmbar, so dass entweder zuerst das erste Filterelement und dann das zweite Filterelement oder zuerst das zweite und dann das erste Filterelement durchströmt wird.

Der Filtermediumkörper der Filterelemente kann ein mehrfach gefaltetes Filtermedium aufweisen, so dass es sich bei dem Filtermediumkörper um einen Filterbalg handeln kann. Ein Faltenabstand des Filterbalgs kann beispielsweise zwischen 3 und 5 mm liegen und eine Faltenhöhe zwischen 20 und 30 mm. Es können in Ausführungsformen von 30 bis 300 Faltungen vorliegen. Alternativ kann der Filtermediumkörper auch ein Filtermedium umfassen, das in ungefalteter Form vorliegt, beispielsweise in Form eines Schaums oder sonstigen porösen Materials oder Wabenkörpers. Ferner kann der Filtermediumkörper in Form einer Kombination von flachen und gewellten Lagen von Filtermedium bereitgestellt werden, d.h. als so genannter Kompaktfilter.

Vorteilhaft können die Filterelemente der erfindungsgemäßen Filtervorrichtung vollständig aus thermisch verwertbaren Materialien bestehen, so dass sich keine Entsorgungsproblematik ergibt und insbesondere eine Demontage einzelner Komponenten der Filterelemente im Verwertungskreislauf nicht erforderlich ist.

Man spricht hierin von einer axialen Richtung und radialen Richtung der Filtervorrichtung bzw. der Filterelemente, wobei unter "axial" in Durchströmungsrichtung, also senkrecht zu einer Anströmfläche oder -seite der Filterelemente, verstanden wird. Unter "radial" wird eine Normalrichtung einer Seitenfläche oder -Wand eines Rahmens oder einer seitlichen Fläche der Filterelemente verstanden. Die Radialrichtung verläuft normal zur Axialrichtung.

Der jeweilige Filtermediumkörper kann ein Filtermedium aufweisen, bei dem es sich beispielsweise um ein Filtergewebe, ein Filtergelege oder ein Filtervlies handelt. Insbesondere kann das Filtermedium in einem Spinnvlies- oder Meltblownverfahren hergestellt sein. Weiter kann das Filtermedium verfilzt oder genadelt sein. Das Filtermedium kann Naturfasern, wie Baumwolle, oder Kunstfasern, beispielsweise aus Polyester, Polyphenylsulfid oder Polytetrafluorethylen, aufweisen.

Es kann insbesondere vorgesehen sein, dass das erste und das zweite Filterelement mittelbar über den Adapterrahmen gegenüber den zumindest zwei Gehäuseteilen abgedichtet sind. Mit anderen Worten hat das zweite Filterelement eine unmittelbare Dichtstelle gegenüber dem zweiten Gehäuseteil, aber keine unmittelbare Dichtstelle gegenüber dem ersten Gehäuseteil. Das erste Filterelement wiederum hat eine unmittelbare Dichtstelle gegenüber dem ersten Gehäuseteil, nicht aber eine unmittelbare Dichtstelle gegenüber dem zweiten Gehäuseteil. Eine Abdichtung der beiden Filterelemente gegenüber beiden Gehäuseteilen erfolgt also unter Zwischenschaltung des Adapterrahmens, der einerseits die beiden Filterelemente gegeneinander abdichtet und andererseits Dichtungsvorspannungskräfte überträgt. Um die Dichtungsvorspannungskräfte übertragen zu können, ist die umlaufende fluiddichte Wand des Adapterrahmens hinsichtlich ihrer Steifigkeit durch fachmännisches Handeln entsprechend auszulegen.

Gemäß einer weiteren Ausführungsform können die erste umlaufende Dichtfläche des Adapterrahmens und die zweite umlaufende Dichtfläche des Adapterrahmens in Axialrichtung voneinander beabstandet und voneinander wegweisend ausgerichtet sein. Der axiale Abstand der ersten und zweiten Dichtfläche des Adapterrahmens entspricht einem Abstand der umlaufenden Dichtungen der beiden Filterelemente in ihrem Montagezustand. Insbesondere kann die erste umlaufende Dichtfläche des Adapterrahmens an einer Unterseite der umlaufenden Dichtung des zweiten Filterelements in Dichtkontakt stehen, während die zweite umlaufende Dichtfläche des Adapterrahmens an einer Oberseite der umlaufenden Dichtung des ersten Filterelements in Dichtkontakt stehen kann. Die Begriffe "Oberseite" und "Unterseite" beziehen sich hierbei insbesondere auf die Schwererichtung bei bestimmungsgemäßer Montage der Filtervorrichtung.

Gemäß einer noch weiteren Ausführungsform kann vorgesehen sein, dass der Adapterrahmen zu dessen erster und/oder zweiter Dichtfläche benachbart einen radial nach außen versetzten, sich in Axialrichtung erstreckenden zumindest teilweise umlaufenden Bundabschnitt aufweist, der eine Aufnahmekammer für die umlaufende Dichtung des ersten und/oder zweiten Filterelements mit begrenzt. Der Bundabschnitt begrenzt einerseits eine Verformung der umlaufenden Dichtung des ersten und/oder zweiten Filterelements in Radialrichtung und stellt andererseits eine Schutzwirkung für die umlaufende Dichtung bereit, so dass diese vor mechanischen Beschädigungen geschützt ist und verhindert werden kann, dass Schmutz in den Dichtkontakt gelangt.

Ferner kann die umlaufende Dichtung des ersten und/oder zweiten Filterelements ein Dichtungsprofil aufweisen, das radial über den Filtermediumkörper des ersten und/oder zweiten Filterelements auskragt. Das Dichtungsprofil ist der Bestandteil der umlaufenden Dichtung, an dem die eigentliche Dichtwirkung stattfindet. Das Dichtungsprofil kann in Ausführungen ein axial wirksames Dichtungsprofil sein.

Hierbei kann vorgesehen sein, dass der zumindest teilweise umlaufende Bundabschnitt des Adapterrahmens das Dichtungsprofil in Axialrichtung überragt. Hierdurch wird hierin bereits erwähnte Schutzwirkung weiter verbessert.

Gemäß einer weiteren Ausführungsform kann vorgesehen sein, dass der zumindest teilweise umlaufende Bundabschnitt des Adapterrahmens unter einen spitzen Winkel gegenüber der Axialrichtung verläuft. Hierdurch wird einerseits die Montage erleichtert, da der winklig ausgerichtet Bundabschnitt als Montageschräge dient, andererseits kann an dem winklig ausgerichteten Bundabschnitt eine kombinierte radial-axiale Abdichtung erfolgen, was die Dichtwirkung verbessert kann.

Gemäß einer weiteren Ausführungsform kann das erste Gehäuseteil ein Grundgehäuseteil sein und das zweite Gehäuseteil ein abnehmbarer Gehäusedeckel. Insbesondere kann in einem bestimmungsgemäßen Benutzungszustand der Filtervorrichtung das Grundgehäuseteil zuunterst angeordnet ist, so dass, ausgehend von dem Grundgehäuseteil in Axialrichtung gesehen auf das Grundgehäuseteil das erste Filterelement, der Adapterrahmen, das zweite Filterelement und schließlich der Gehäusedeckel folgt. Das Grundgehäuseteil kann in dem bestimmungsgemäßen Benutzungszustand insbesondere in Schwererichtung unten angeordnet sein, während der Gehäusedeckel in Schwererichtung oben angeordnet sein kann.

In einer bevorzugten Weiterbildung kann das erste Filterelement durch Abnehmen des Grundgehäuseteils von unten austauschbar sein und das zweite Filterelement durch Abnehmen des Gehäusedeckels von oben austauschbar sein. "Oben" und "unten" beziehen sich hierbei auf eine bestimmungsgemäße Anordnung des Filtergehäuses in einem Benutzungszustand bezüglich der Schwererichtung. Vorteilhaft kann hierdurch auch in beengten Bauraumverhältnissen ein einfacher und schneller Filterelementservice durchgeführt werden.

Gemäß einer noch einer weiteren Ausführungsform kann das Dichtungsprofil der umlaufenden Dichtung des ersten Filterelements eine umlaufende Nut aufweisen, an deren Nutgrund die umlaufende Gehäusedichtfläche des ersten Gehäuseteils anliegt. Mit anderen Worten nimmt die umlaufende Nut des Dichtungsprofils der umlaufenden Dichtung des ersten Filterelements einen Wandabschnitt des ersten Gehäuseteils auf, der die umlaufende Gehäusedichtfläche des ersten Gehäuseteils aufweist. Durch die Anlage der umlaufenden Gehäusedichtfläche des ersten Gehäuseteils an dem Nutgrund der Nut des Dichtungsprofils der umlaufenden Dichtung des ersten Filterelements werden Dichtungsvorspannkräfte übertragen und das Dichtungsprofil in Radialrichtung gestützt, so dass sich dieses unter dem Einfluss der Dichtungsvorspannkräfte nicht unkontrolliert verformt.

Ferner kann das Dichtungsprofil der umlaufenden Dichtung des zweiten Filterelements eine umlaufende Nut aufweisen, an deren Nutgrund die erste umlaufende Dichtfläche des Adapterrahmens anliegt. Mit anderen Worten nimmt die umlaufende Nut des Dichtungsprofils der umlaufenden Dichtung des zweiten Filterelements einen Wandabschnitt des Adapterahmens auf, der die erste umlaufende Dichtfläche des Adapterrahmens aufweist. Durch die Anlage der ersten umlaufenden Dichtfläche des Adapterrahmens an dem Nutgrund der Nut des Dichtungsprofils der umlaufenden Dichtung des zweiten Filterelements werden Dichtungsvorspannkräfte übertragen und das Dichtungsprofil in Radialrichtung gestützt, so dass sich dieses unter dem Einfluss der Dichtungsvorspannkräfte nicht unkontrolliert verformt.

Alternativ oder zusätzlich kann das Dichtungsprofil der umlaufenden Dichtung des ersten Filterelements eine der umlaufenden Nut abgewandte Axialdichtfläche aufweisen, an der die zweite Dichtfläche des Adapterrahmens anliegt. Insbesondere können die Wirkrichtungen der ersten und zweiten Dichtflächen des Adapterrahmens einander entgegen gerichtet sein.

Darüber hinaus kann das Dichtungsprofil der umlaufenden Dichtung des zweiten Filterelements eine der umlaufenden Nut abgewandte Axialdichtfläche aufweisen, an der die umlaufende Gehäusedichtfläche des zweiten Gehäuseteils anliegt.

In Ausführungen kann die umlaufende Dichtung des ersten und/oder zweiten Filterelements im Querschnitt zumindest zwei Schenkel aufweisen, nämlich
- einen Querschenkel, der mit einer Anström- oder Abströmfläche des Filtermediumkörpers des jeweiligen Filterelements verbunden ist und
- einen Längsschenkel, der mit einer Seitenfläche des Filtermediumkörpers des jeweiligen Filterelements verbunden ist.

Insbesondere können der Querschenkel und der Längsschenkel mit dem Dichtungsprofil verbunden sein, insbesondere einteilig mit diesem sein, insbesondere einteilig durch ein Gießverfahren erzeugt sein.

Vorteilhaft lassen sich die Schenkel und das Dichtungsprofil der umlaufenden Dichtung in einem gemeinsamen Verfahrensschritt in einem einzigen Werkzeug (Gießschale) erzeugen. Vorgenannte Schenkel - Querschenkel und Längsschenkel - können mit anderen Worten auch als Verbindungsschenkel der umlaufenden Dichtung bezeichnet werden, da diese in erster Linie das Dichtungsprofil mit dem Filtermediumkörper verbinden.

Gemäß einer noch weiteren Ausführungsform kann die umlaufende Dichtung unmittelbar stoffschlüssig mit dem Filtermediumkörper des ersten und/oder zweiten Filterelements verbunden sein. Bei der unmittelbar stoffschlüssigen Verbindung der umlaufenden Dichtung kann es sich unabhängig von der Ausführungsform um eine Anschäumung handeln, was insbesondere unter Verwendung eines Polyurethans als Ausgangsmaterial ein großindustriell etablierter Vorgang ist.

In Ausführungen kann der Filtermediumkörper, insbesondere Filterbalg, des ersten und/ oder zweiten Filterelements abgedichtete Faltenstirnkanten aufweisen, insbesondere in Form einer fluiddichten Verklebung von Faltenzwischenräumen und/oder zumindest eines auf den Faltenstirnkanten angebrachten Rahmenelements. Durch die abgedichteten Stirnkanten wird ein Bypass des Filtermediumkörpers des jeweiligen Filterelements unterbunden. Das Rahmenelement kann insbesondere ein den Filtermediumkörper des jeweiligen Filterelements vollständig umlaufendes Rahmenelement sein und alternativ oder zusätzlich mit der umlaufenden Dichtung fluiddicht verbunden sein, insbesondere mit dieser stoffschlüssig verbunden sein, beispielsweise von der umlaufenden Dichtung umschäumt.

In einer weiteren Ausführungsform kann die Filtervorrichtung eine Verbindungsvorrichtung aufweisen, die das erste Gehäuseteil mit dem zweiten Gehäuseteil verbindet und eine zumindest axial gerichtete Vorspannkraft erzeugt. Insbesondere weist der Adapterrahmen eine Führungsvorrichtung auf, die zur Führung der Verbindungsvorrichtung in zumindest einer Richtung normal zur Axialrichtung mit der Verbindungsvorrichtung gekoppelt ist. Bei der Führungsvorrichtung des Adapterrahmens kann es sich beispielsweise um ein Durchgangsloch oder eine nach radial außen offene, sich in Axialrichtung erstreckende Führungsnut handeln, in der die Verbindungsvorrichtung aufgenommen ist. Die Verbindungsvorrichtung übt eine axial gerichtet Vorspannkraft zur Vorspannung der umlaufenden Dichtungen des ersten und zweiten Filterelements zwischen dem ersten und dem zweiten Gehäuseteil aus, wobei sich der Adapterrahmen mittelbar im Kraftfluss befindet.

Gemäß einer weiteren Ausführungsform kann vorgesehen sein, dass die Verbindungsvorrichtung von der Seite des zweiten Gehäuseteils, insbesondere des Gehäusedeckels, her zugänglich ist, insbesondere wobei die Verbindungsvorrichtung zumindest eine Schraube umfasst, die mit einem korrespondierenden Gewinde am ersten Gehäuseteil gekoppelt ist. Die vorliegende Erfindung ist jedoch nicht hierauf beschränkt, vielmehr kann die Verbindungsvorrichtung auch andere dem Fachmann geeignet erscheinende Verbindungsmittel umfassen, die dazu geeignet sind, eine zumindest axial gerichtete Vorspannkraft zwischen den beiden Gehäuseteilen zu erzeugen.

In Ausführungen kann der Filtermediumkörper zumindest eines der Filterelemente ein Partikelfiltermedium aufweisen, insbesondere umfassend ein synthetisches Vliesmaterial und/oder ein zellulosebasiertes Filtermedium, wobei insbesondere das Partikelfiltermedium Filtrationsklasse H13 oder H14 nach DIN EN 1822-1 erfüllt. Alternativ oder zusätzlich kann der Filtermediumkörper zumindest eines der Filterelemente ein Gasfiltermedium aufweisen, insbesondere umfassend zumindest ein Adsorbens, insbesondere eine Aktivkohle, einen Zeolith und/oder einen Ionentauscher.

Das Gasfiltermedium kann auch eine eigene Partikelfilterlage umfassen, insbesondere umfassend ein insbesondere synthetisches Vliesmaterial. Alternativ kann das Gasfiltermedium auch nur eine Stützlage aufweisen, die das in Granulat- oder Partikelform bereitgestellte Adsorbens immobilisiert, wobei die Stützlage ein Vliesmaterial mit einer gegenüber dem Partikelfiltermedium vergleichsweise deutlich größeren Porengröße haben kann.

Gemäß einer bevorzugten Ausführungsform kann das zweite Filterelement das Gasfiltermedium aufweisen. Insbesondere kann in dem bestimmungsgemäßen Benutzungszustand der Filtervorrichtung das zweite Filterelement nach dem ersten Filterelement durchströmt werden.

Mit anderen Worten kann das Filterelement, das das Gasfiltermedium aufweist, stromabwärts des Filterelements, das das Partikelfiltermedium aufweist, angeordnet sein. So kann ein durch die erfindungsgemäße Filtervorrichtung hindurchtretender Luftstrom zunächst das Filterelement umfassend das Partikelfiltermedium durchströmen und danach das Filterelement, das das Gasfiltermedium aufweist. Dies hat den Vorteil, dass das Gasfiltermedium mit von Partikeln befreiter Luft durchströmt werden kann, was die Adsorptionsleistung des Gasfiltermediums, insbesondere über die Zeit gesehen, verbessert, da Poren des Adsorbens des Gasfiltermediums nicht mit Partikeln "verstopft" werden.

Weiterhin kann das Partikelfiltermedium und/oder Gasfiltermedium eine antimikrobielle und/oder antiallergene Wirkung aufweisen. Als antimikrobieller Stoff kommt beispielsweise Zink-Pyrithion oder Nanosilber, als antiallergener Stoff beispielsweise Polyphenol in Betracht.

Gemäß einer bevorzugten Weiterbildung kann das erste Gehäuseteil und/oder das zweite Gehäuseteil zum Austausch zumindest eines der Filterelemente kollabierbar ausgebildet sein, so dass eine Erstreckung des jeweiligen Gehäuseteils zumindest in oder entgegen der Durchströmungsrichtung reduzierbar ist. Hierdurch wird ein nochmals verbesserter Filterelementservice in beengten Bauraumverhältnissen ermöglicht. Unter "kollabierbar" wird hierin insbesondere verstanden, dass das jeweilige Gehäuseteil, insbesondere das Grundgehäuseteil, zumindest einen nachgiebigen Abschnitt aufweist, entlang dem das jeweilige Gehäuseteil entlang der Durchströmungsrichtung zusammengeschoben und/oder zusammengefaltet werden kann. Solche nachgiebigen Abschnitte können durch einen oder mehrere umlaufende Materialdickenreduzierungen an der Wandung des jeweiligen Gehäuseteils realisiert werden, so dass diese gewissermaßen jeweils ein Filmscharnier bilden. Alternativ oder zusätzlich können die nachgiebigen Abschnitte auch aus einem nachgiebigeren und/oder biegeschlafferen Material als die Wandung des jeweiligen Gehäuseteils gebildet sein, wobei sich hierfür insbesondere eine Fertigung in einem 2K-Kunststoffspritzgussverfahren anbietet. Die nachgiebigen Abschnitte können mit der Wandung des jeweiligen Gehäuseteils jedoch auch auf andere Art und Weise verbunden sein, beispielsweise durch Schweißen oder formschlüssige Befestigungsmittel, etwa Clipse.

Ein weiterer Aspekt der vorliegenden Erfindung betrifft die Verwendung eines Filterelements umfassend einen Filtermediumkörper und eine diesen umlaufende Dichtung als erstes Filterelement in einer erfindungsgemäßen Filtervorrichtung. Die umlaufende Dichtung liegt hierbei an der zweiten Dichtfläche des Adapterrahmens und an der umlaufenden Gehäusedichtfläche des ersten Gehäuseteils dichtend an.

Ein noch weiterer Aspekt der vorliegenden Erfindung betrifft die Verwendung eines Filterelements umfassend einen Filtermediumkörper und eine diesen umlaufende Dichtung als zweites Filterelement in einer erfindungsgemäßen Filtervorrichtung. Die umlaufende Dichtung liegt hierbei an der ersten Dichtfläche des Adapterrahmens und an der umlaufenden Gehäusedichtfläche des zweiten Gehäuseteils dichtend an.

Weitere mögliche Implementierungen der Erfindung umfassen auch nicht explizit genannte Kombinationen von zuvor oder im Folgenden bezüglich der Ausführungsbeispiele beschriebenen Merkmale. Dabei wird der Fachmann auch Einzelaspekte als Verbesserungen oder Ergänzungen zu der jeweiligen Grundform der Erfindung hinzufügen.

Im Weiteren wird die Erfindung anhand von Ausführungsbeispielen unter Bezugnahme auf die beigelegten Figuren näher erläutert.

### Kurze Beschreibung der Zeichnungen

Es zeigen dabei:
Fig. 1 eine Längsschnittansicht einer erfindungsgemäßen Filtervorrichtung;
Fig. 2 Detail A gemäß Fig. 1;
Fig. 3 eine Längsschnittansicht einer erfindungsgemäßen Filtervorrichtung;
Fig. 4 eine isometrische Ansicht eines Adapterrahmens sowie eines ersten und zweiten Filterelements einer erfindungsgemäßen Filtervorrichtung;
Fig. 5 eine Längsschnittansicht einer erfindungsgemäßen Filtervorrichtung gemäß einer weiteren Ausführungsform in einem Betriebszustand;
Fig. 6 eine Längsschnittansicht der Filtervorrichtung gemäß Fig. 5 in einem Servicezustand mit teilweise entnommenem ersten Filterelement;
Fig. 7 eine Längsschnittansicht der Filtervorrichtung gemäß Fig. 5 im Servicezustand mit vollständig entnommenem ersten Filterelement.

### Ausführungsform(en) der Erfindung

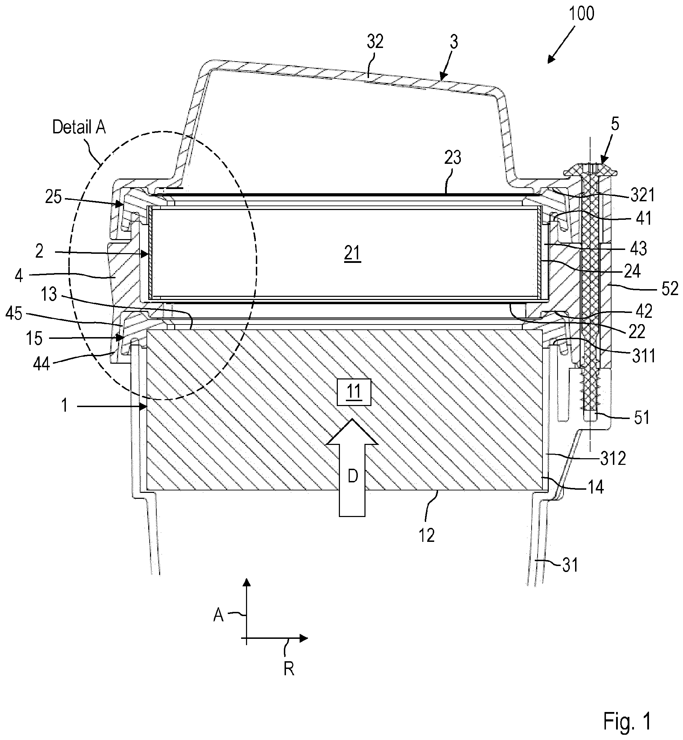

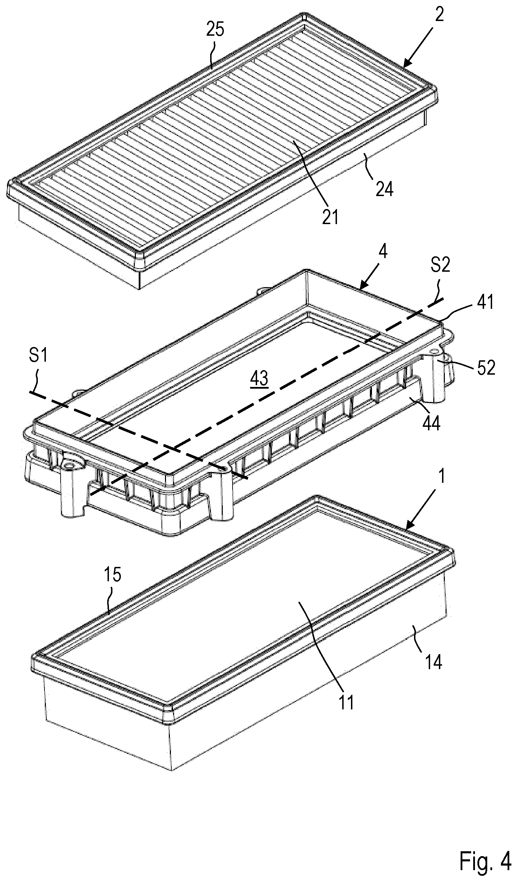

Fig. 1 zeigt die erfindungsgemäße Filtervorrichtung 100 in einer Längsschnittansicht, wobei die zu Grunde liegende Schnittebene S1 in Fig. 4 eingezeichnet ist, d.h. die Schnittebene verläuft parallel zu einer kurzen Seite des Filtergehäuses 3. Das Filtergehäuse 3 verfügt über ein erstes Gehäuseteil 31, insbesondere ein Grundgehäuseteil 31, sowie ein zweites Gehäuseteil 32, insbesondere ein abnehmbarer Gehäusedeckel 32. Am Filtergehäuse 3 befindet sich ein nicht dargestellter rohseitiger Einlass sowie ein reinseitiger Auslass, wobei zwei Filterelemente 1, 2 der Filtervorrichtung 100 den Einlass von dem Auslass trennen.

Die Filterelemente 1, 2 umfassen jeweils einen Filtermediumkörper 11, 21, der ein Filtermedium umfasst. Insbesondere können die Filtermediumkörper 11, 21 ein mehrfach gefaltetes Filtermedium aufweisen, so dass es sich jeweils um Filterbälge handelt.

Die zwei Filterelemente 1, 2 sind seriell durchströmbar, insbesondere wird das erste Filterelement 1 in Durchströmungsrichtung D vor dem zweiten Filterelement 2 durchströmt. Die Durchströmungsrichtung D verläuft in oder parallel zur Axialrichtung A. Ein durch die Filtervorrichtung 100 hindurchtretender Luftstrom passiert zunächst eine Anströmseite 12 des ersten Filterelements 1, dann den Filtermediumkörper 11 des ersten Filterelements 1 und verlässt das erste Filterelement 1 an der Abströmseite 13 des ersten Filterelements 1. Im weiteren Verlauf passiert der Luftstrom eine Anströmseite 22 des zweiten Filterelements 2, dann den Filtermediumkörper 21 des zweiten Filterelements 2 und verlässt das zweite Filterelement 2 an der Abströmseite 23 des ersten Filterelements 1.

Die Filterelemente 1, 2 weisen jeweils einen zumindest teilumfänglich verlaufenden Rahmen 14, 24 auf, der den Filtermediumkörper 11, 21 des jeweiligen Filterelements 1, 2 seitlich abdichtet. Der Rahmen 14 des ersten Filterelements 1 ist als Abdichtung von Faltenstirnkanten des Filtermediumkörpers 11 ausgebildet, während der Rahmen 24 des zweiten Filterelements 2 als ein auf den Faltenstirnkanten des Filtermediumkörpers 21 angebrachtes Rahmenelement, insbesondere umfassend zumindest ein Seiten- und/oder Kopfband, ausgebildet ist.

Die beiden Filterelemente 1, 2 sind separat und untereinander unverbunden und dichten gegenüber dem ersten und dem zweiten Gehäuseteil 31, 32 mittelbar über einen sich dazwischen befindlichen Adapterrahmen 4 ab.

Das erste Filterelement 1 ist in einem Filterelementaufnahmeraum 312 des ersten Gehäuseteils 1 aufgenommen und weist eine umlaufende Dichtung 15 auf, die mit dem Filtermediumkörper 11 dicht verbunden ist. Die umlaufende Dichtung 15 des ersten Filterelements 1 liegt an einem axialen Ende an einer umlaufenden Gehäusedichtfläche 311 des ersten Gehäuseteils 31 dichtend an. An einem anderen axialen Ende liegt die umlaufende Dichtung 15 des ersten Filterelements 1 an einer zweiten umlaufenden Dichtfläche 42 des Adapterrahmens 4 dichtend an.

Das zweite Filterelement 2 ist in einem Filterelementaufnahmeraum 43 des Adapterrahmens 4 aufgenommen und weist eine umlaufende Dichtung 25 auf, die mit dem Filtermediumkörper 21 dicht verbunden ist. Die umlaufende Dichtung 25 des zweiten Filterelements 2 liegt an einem axialen Ende an einer ersten umlaufenden Dichtfläche 41 des Adapterrahmens 4 dichtend an. An einem anderen axialen Ende liegt die umlaufende Dichtung 25 des zweiten Filterelements 2 an einer umlaufenden Gehäusedichtfläche 321 des zweiten Gehäuseteils 32 dichtend an.

Erfindungsgemäß haben die beiden Filterelemente 1, 2 jeweils nur eine unmittelbare Dichtstelle gegenüber einem der Gehäuseteile 31, 32, während die Abdichtung gegenüber dem anderen der Gehäuseteile 31, 32 mittelbar über den Adapterrahmen 4 bereitgestellt wird. Insofern ermöglicht die vorliegende Erfindung die einfache Weiterbildung eines existierendes einstufigen Filtersystems zu einer mehrstufigen Filtervorrichtung 100. Um dies zu erreichen, ist es ist insbesondere von Vorteil, wenn ein Querschnitt der umlaufenden Gehäusedichtfläche 311 des ersten Gehäuseteils 31 einem Querschnitt der ersten umlaufenden Dichtfläche 41 des Adapterrahmens 4 entspricht. Ferner ist es von Vorteil, wenn der Querschnitt der umlaufenden Gehäusedichtfläche 321 des zweiten Gehäuseteils 32 einem Querschnitt der zweiten umlaufenden Dichtfläche 42 des Adapterrahmens 4 entspricht.

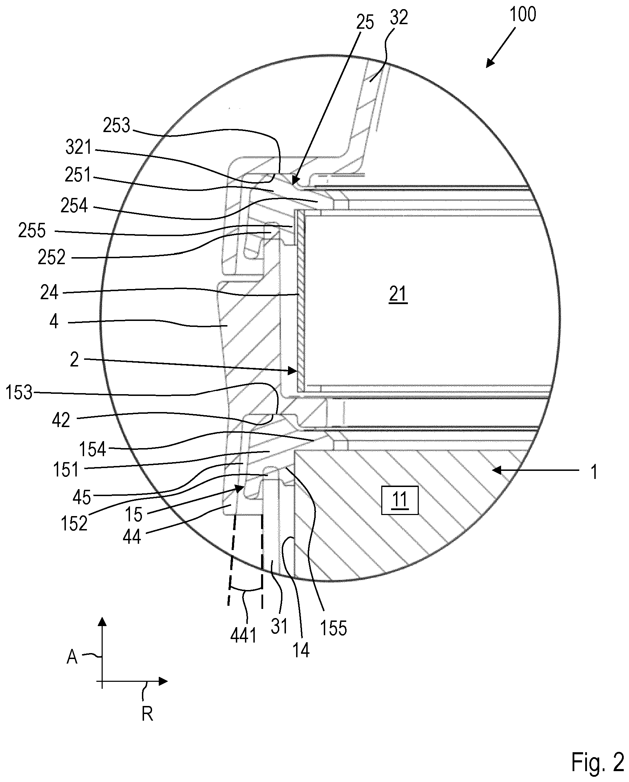

Die umlaufende Dichtung 15, 25 der Filterelemente 1, 2 weist jeweils ein in Radialrichtung R auskragendes Dichtungsprofil 151, 251 (siehe Fig. 2) auf, an dem die eigentliche Dichtwirkung stattfindet. Das Dichtungsprofil 151 des ersten Filterelements 1 ist in einer Aufnahmekammer 45 aufgenommen, die am Adapterrahmen 4 benachbart zu seiner zweiten Dichtfläche 42 vorliegt. Die Aufnahmekammer 45 wird radial außen durch einen Bundabschnitt 44 des Adapterrahmens 4 begrenzt, der das Dichtungsprofil 151 des ersten Filterelements in Axialrichtung A überragt. Der Bundabschnitt 44 des Adapterrahmens 4 begrenzt eine nicht beabsichtigte Verformung der umlaufenden Dichtung 15 des ersten Filterelements 1 in Radialrichtung R unter Einwirkung der zumindest in Axialrichtung A einwirkenden Dichtungsvorspannkräfte.

Die beiden Gehäuseteile 31, 32 sind mittels zumindest einer Verbindungsvorrichtung 5 verbunden, die eine Schraube 5 umfasst. Die Schraube 5 ist durch eine Durchgangsbohrung des zweiten Gehäuseteils 32 gesteckt und erstreckt sich weiter durch eine Führungsvorrichtung 52 des Adapterrahmens 4 und ist schließlich mit einem Gewinde 51 am ersten Gehäuseteil 31 gekoppelt. Die Verbindungsvorrichtung 5 erzeugt eine zumindest axial A gerichtete Vorspannkraft und stellt damit die zur Abdichtung der Filterelemente 1, 2 nötige Dichtungsvorspannung bereit. Über einen Umfang des Filtergehäuses 3 verteilt kann insbesondere eine Mehrzahl an Schrauben 5 vorliegen, um eine möglichst gleichmäßige Vorspannung der umlaufenden Dichtungen 15, 25 des ersten und zweiten Filterelements 1, 2 zu ermöglichen. Die Führungsvorrichtung 52 des Adapterrahmens 4 ist insbesondere als Durchgangsbohrung ausgebildet, wobei die Schraube lose hindurch gesteckt ist. Die Verbindungsvorrichtung 5 sichert den Adapterrahmen 4 in Radialrichtung R relativ zu den Gehäuseteilen 31, 32, so dass dieser auch unter missbräuchlicher Verwendung der Filtervorrichtung 100 nicht seitlich verrutscht. Ferner wird hierdurch eine einfache und geführte Montage der Schraube 5 ermöglicht. Die Schraube 5 ist so angeordnet, dass diese in einer bestimmungsgemäßen Benutzungsanordnung der Filtervorrichtung 100 von dem zweiten Gehäuseteil 32 her, welches insbesondere einen Gehäusedeckel darstellt, zugänglich ist.

In **Fig. 2** ist Detail A gemäß Fig. 1 dargestellt, wobei die dichtenden Schnittstellen zwischen den beiden Filterelementen 1, 2, dem Adapterrahmen 4 und den beiden Gehäuseteilen 31, 32 gut zu erkennen sind.

Die umlaufenden Dichtungen 15, 25 der beiden Filterelemente 1, 2 weisen jeweils einen Längsschenkel 155, 255 auf, der mit den Seitenflächen bzw. dem Rahmen 14, 24 des Filtermediumkörpers 11, 21 des jeweiligen Filterelements 1, 2 verbunden ist. Ferner weisen die umlaufenden Dichtungen 15, 25 der beiden Filterelemente 1, 2 jeweils einen Querschenkel 154, 254 auf, der mit einer Anström- oder Abströmfläche 13, 23 des Filtermediumkörpers 11, 21 des jeweiligen Filterelements 1, 2 verbunden ist. Einteilig mit den Längsschenkeln 155, 255 und Querschenkeln 154, 254 ist das Dichtungsprofil 151, 251 der umlaufenden Dichtungen 15, 25 ausgebildet. Das Dichtungsprofil 151, 251 kragt in Radialrichtung R über den Filtermediumkörper 11, 21 des jeweiligen Filterelements 1, 2 aus. Über die Längsschenkel 155, 255 und Querschenkel 154, 254 wird das Dichtungsprofil 15, 25 sicher und dicht an dem Filtermediumkörper 11, 21 des jeweiligen Filterelements 1, 2 gehalten. Die Längsschenkel 155, 255 und Querschenkel 154, 2 54 können im Wege einer Anschäumung eines fließfähigen und aushärtbaren Dichtungsmaterials an die Filtermediumkörper 11, 21 erzeugt werden.

Das Dichtungsprofil 151 der umlaufenden Dichtung 15 des ersten Filterelements 1 hat eine umlaufende Nut 152, an deren Nutgrund die umlaufende Gehäusedichtfläche 311 des ersten Gehäuseteils 31 anliegt. Das Dichtungsprofil 251 der umlaufenden Dichtung 25 des zweiten Filterelements 2 hat eine umlaufende Nut 252, an deren Nutgrund die erste umlaufende Dichtfläche 41 des Adapterrahmens 4 anliegt.

Das Dichtungsprofil 151 der umlaufenden Dichtung 15 des ersten Filterelements 1 umfasst eine der umlaufenden Nut 152 abgewandte Axialdichtfläche 153, an der die zweite Dichtfläche 42 des Adapterrahmens 42 anliegt. Das Dichtungsprofil 251 der umlaufenden Dichtung 25 des zweiten Filterelements 2 umfasst eine der umlaufenden Nut 252 abgewandte Axialdichtfläche 253, an der die umlaufende Gehäusedichtfläche 321 des zweiten Gehäuseteils 32 anliegt.

Die nach radial außen von dem Bundabschnitt 44 begrenzte Aufnahmekammer 45 des Adapterrahmens 4 weist gegenüber der Axialrichtung A einen spitzen Winkel 441 auf. Hierdurch wird einerseits die Montage erleichtert, da der winklig ausgerichtet Bundabschnitt 44 als Montageschräge dient, andererseits kann an dem winklig ausgerichteten Bundabschnitt 44 eine kombinierte radial-axiale Abdichtung der umlaufenden Dichtung 15 des ersten Filterelements 1 erfolgen, wenn in Ausführungen eine äußere Mantelfläche der umlaufenden Dichtung 15 hieran zur Anlage gebracht wird.

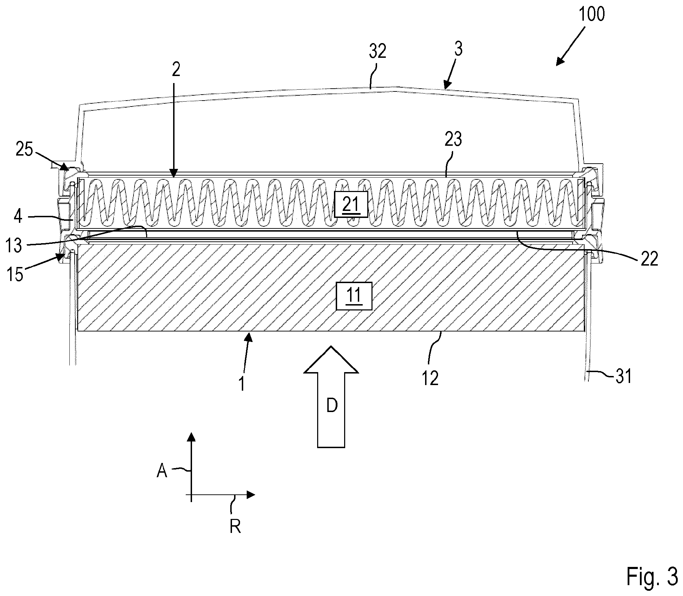

**Fig. 3** zeigt die erfindungsgemäße Filtervorrichtung 100 in einer Längsschnittansicht, wobei die zu Grunde liegende Schnittebene S2 in Fig. 4 eingezeichnet ist, d.h. die Schnittebene verläuft parallel zu einer langen Seite des Filtergehäuses 3.

In **Fig. 4** sind das erste Filterelement 1, das zweite Filterelement 2 sowie der Adapterrahmen 4 der erfindungsgemäßen Filtervorrichtung 100 ohne das Filtergehäuse dargestellt. Hierbei ist zu erkennen, dass der Adapterrahmen 4 über seinen Umfang verteilt eine Mehrzahl von Führungsvorrichtungen 52 für die Verbindungsvorrichtung 5 (siehe Fig. 1) aufweist.

Ausgehend von den in Fig. 4 gezeigten Vorrichtungsbestandteilen ist das Vorgehen beim Einbau in das Filtergehäuse wie in dem im Folgenden beschriebenen Verfahren zum Einbau von Filterelementen in eine erfindungsgemäße Filtervorrichtung:
- Einsetzen des ersten Filterelements 1 in den Filterelementaufnahmeraum 312 des ersten Gehäuseteils 31, dadurch zur Anlage Bringen der umlaufenden Dichtung 15 des ersten Filterelements 1 auf der umlaufenden Gehäusedichtfläche 311 des ersten Gehäuseteils;
- Aufsetzen des Adapterrahmens 4 auf das erste Filterelement 1, dadurch zur Anlage Bringen der zweiten umlaufenden Dichtfläche 42 des Adapterrahmens 4 auf der umlaufenden Dichtung 15 des ersten Filterelements;
- Aufsetzen des zweiten Filterelements 2 auf den Adapterrahmen 4, dadurch zur Anlage Bringen der umlaufenden Dichtung 25 des zweiten Filterelements 2 auf der ersten umlaufenden Dichtfläche 41 des Adapterrahmens 4;
- Aufsetzen des zweiten Gehäuseteils 32 auf das zweite Filterelement 2, dadurch zur Anlage Bringen der umlaufenden Gehäusedichtfläche 321 des zweiten Gehäuseteils 32 auf der umlaufenden Dichtung 25 des zweiten Filterelements.

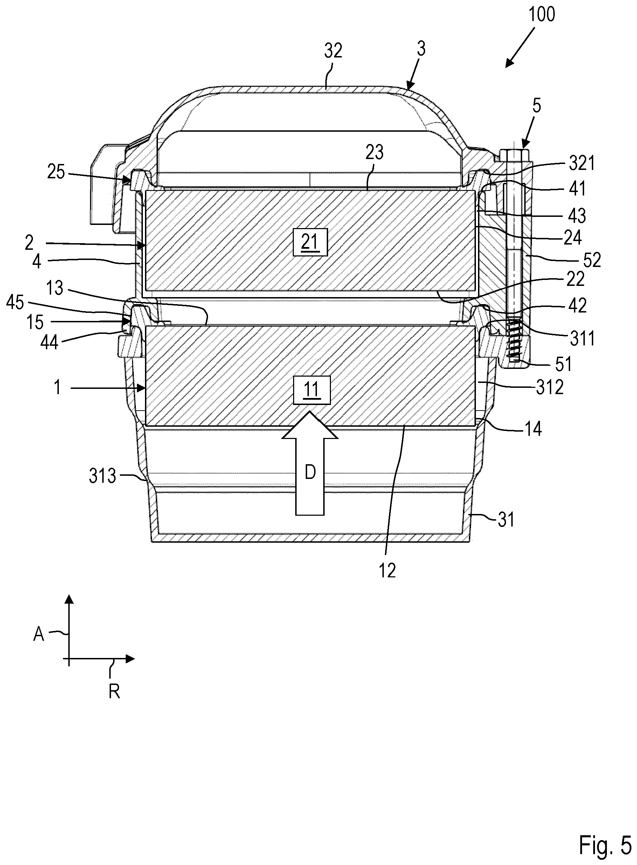

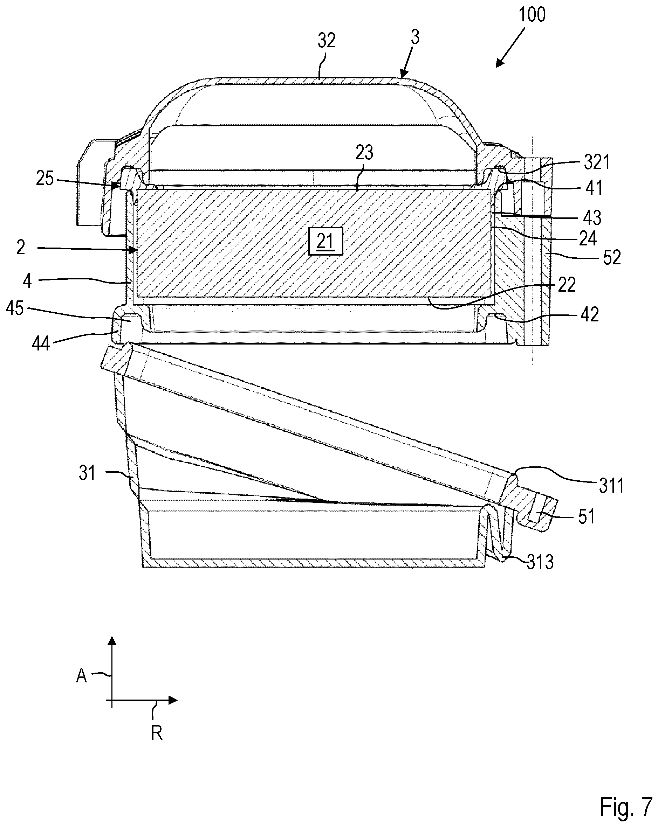

Die in **Fig. 5** bis **Fig. 7** dargestellte Filtervorrichtung 100 gemäß einer weiteren Ausführungsform entspricht im Wesentlichen der ersten in den Fig. 1 bis Fig. 4 dargestellten, weshalb im Folgenden nur auf die Unterschiede eigegangen wird.

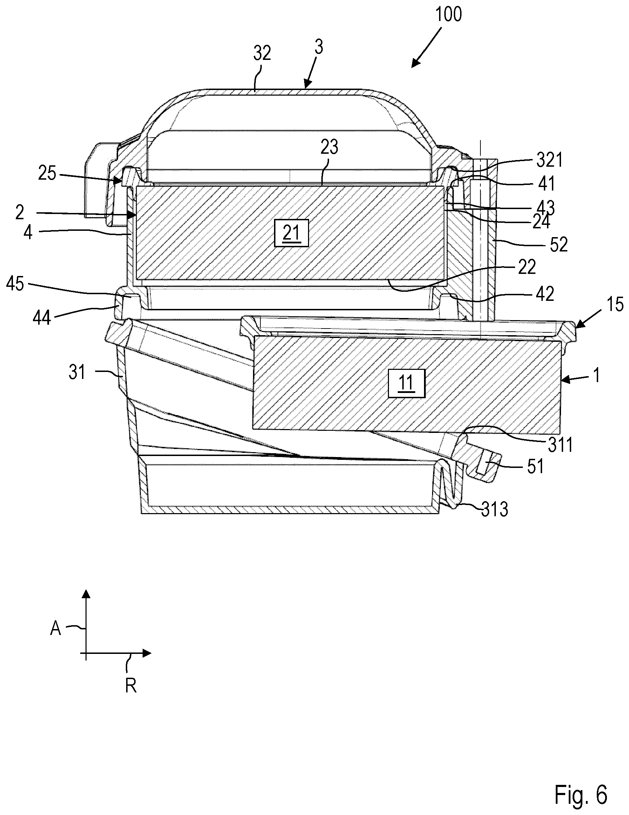

Der Hauptunterschied besteht darin, dass das Grundgehäuseteil 31 kollabierbar ausgebildet ist. Zu diesem Zweck verfügt eine Wandung des Grundgehäuseteils 31 über zwei in Durchströmungsrichtung D beabstandet angeordneter umlaufender nachgiebiger Abschnitte 313, entlang derer das Grundgehäuseteil 31 beim Filterelementservice entgegen der Durchströmungsrichtung D zusammengefaltet werden kann. Der Servicezustand mit zumindest einseitig kollabierter Wandung des Grundgehäuseteils 31 ist in Fig. 6 gezeigt. Hierdurch wird ermöglicht, dass das erste Filterelement 1 auch in beengten Bauraumverhältnissen von unten her getauscht werden kann, ohne dass das Grundgehäuseteil 31 aus dem Bauraum entnommen werden muss. Durch die zumindest einseitig kollabierte Wandung des Grundgehäuseteils 31 wird ein Freiraum zwischen der Gehäusedichtfläche 311 des Grundgehäuseteils 31 und dem Bundabschnitt 44 des Adapterrahmens 4 geschaffen, durch welchen das erste Filterelement 1 problemlos entnommen werden kann.

Die nachgiebigen Abschnitte 313 sind insbesondere umlaufend an der Wandung des Grundgehäuseteils 31 vorgesehen und sind aus einem nachgiebigeren bzw. biegeschlafferen Material gebildet als der Rest der Wandung. Hierdurch wird ermöglicht, dass die nachgiebigen Abschnitte gewissermaßen als Filmscharniere wirken, entlang derer das Grundgehäuseteil 31 zusammengefaltet werden kann. In einem kollabieren Zustand des Grundgehäuseteils 31 bilden die nachgiebigen Abschnitte daher Falten, die insbesondere gegenläufig zueinander ausgebildet sein können.

Um die Kollabierbarkeit zu optimieren, kann eine Erstreckung des Grundgehäuseteils 31 in Radialrichtung entgegen der Durchströmungsrichtung D abnehmen, so dass das Grundgehäuseteil 31 insbesondere teleskopierbar ist, um die avisierte Reduktion der Erstreckung in oder entgegen der Durchströmungsrichtung im kollabierten Zustand zu erreichen.

### Bezugszeichen

- 100: Filtervorrichtung
- 1: Erstes Filterelement
- 11: Filtermediumkörper
- 12: Anströmseite des ersten Filterelements
- 13: Abströmseite des ersten Filterelements
- 14: Rahmen des ersten Filterelements
- 15: Umlaufende Dichtung des ersten Filterelements
- 151: Dichtungsprofil
- 152: Umlaufende Nut
- 153: Axialdichtfläche
- 154: Querschenkel
- 155: Längsschenkel
- 2: Zweites Filterelement
- 21: Filtermediumkörper
- 22: Anströmseite des zweiten Filterelements
- 23: Abströmseite des zweiten Filterelements
- 24: Rahmen des zweiten Filterelements
- 25: Umlaufende Dichtung des zweiten Filterelements
- 251: Dichtungsprofil
- 252: Umlaufende Nut
- 253: Axialdichtfläche
- 254: Querschenkel
- 255: Längsschenkel
- 3: Filtergehäuse
- 31: Erstes Gehäuseteil
- 311: Gehäusedichtfläche des ersten Gehäuseteils
- 312: Filterelementaufnahmeraum des ersten Gehäuseteils
- 313: Nachgiebiger Abschnitt / Falte
- 32: Zweites Gehäuseteil
- 321: Gehäusedichtfläche des zweiten Gehäuseteils
- 4: Adapterrahmen
- 41: Erste Dichtfläche des Adapterrahmens
- 42: Zweite Dichtfläche des Adapterrahmens
- 43: Filterelementaufnahmeraum des Adapterrahmens
- 44: Bundabschnitt des Adapterrahmens
- 441: Winkel des Bundabschnitts
- 45: Aufnahmekammer
- 5: Verbindungsvorrichtung / Schraube
- 51: Gewinde / Bohrung
- 52: Führungsvorrichtung
- A: Axialrichtung
- D: Durchströmungsrichtung
- R: Radialrichtung
- S1, S2: Schnittebenen

## Patentansprüche

1. Filtervorrichtung (100), insbesondere eines Kabinenluftfiltersystems oder eines Ansaugluftfiltersystems einer Brennstoffzelle, umfassend
- zumindest zwei Filterelemente (1, 2), jeweils umfassend einen Filtermediumkörper (11, 21) und eine diesen umlaufende Dichtung (15, 25), und
- ein Filtergehäuse (3) mit zumindest zwei Gehäuseteilen (31, 32),
- wobei ein erstes Gehäuseteil (31) einen Filterelementaufnahmeraum (312) aufweist, in dem ein erstes Filterelement (1) angeordnet ist,
- wobei das erste Gehäuseteil (31) zumindest eine umlaufende Gehäusedichtfläche (311) aufweist, an der eine umlaufende Dichtung (15) des ersten Filterelements (1) dichtend anliegt,
- einen Adapterrahmen (4), der einen Filterelementaufnahmeraum (43) aufweist, in dem ein zweites Filterelement (2) angeordnet ist,
- wobei der Adapterrahmen (4) zumindest eine erste umlaufende Dichtfläche (41) aufweist, an der eine umlaufende Dichtung (25) des zweiten Filterelements (2) dichtend anliegt,
- und wobei der Adapterrahmen (4) zusätzlich eine zweite umlaufende Dichtfläche (42) aufweist, an der die umlaufende Dichtung (15) des ersten Filterelements (1) dichtend anliegt,
- und wobei ein zweites Gehäuseteil (32) eine umlaufende Gehäusedichtfläche (321) aufweist, an der die umlaufende Dichtung (25) des zweiten Filterelements (2) dichtend anliegt.

2. Filtervorrichtung (100) nach Anspruch 1, wobei das erste und das zweite Filterelement (1, 2) mittelbar über den Adapterrahmen (4) gegenüber den zumindest zwei Gehäuseteilen (31, 32) abgedichtet sind.

3. Filtervorrichtung (100) nach Anspruch 1 oder 2, wobei die erste umlaufende Dichtfläche (41) des Adapterrahmens (4) und die zweite umlaufende Dichtfläche (42) des Adapterrahmens (4) in Axialrichtung (A) voneinander beabstandet und voneinander weg weisend ausgerichtet sind.

4. Filtervorrichtung (100) nach einem der vorigen Ansprüche, wobei der Adapterrahmen (4) zu dessen erster und/oder zweiter Dichtfläche (41, 42) benachbart einen radial nach außen versetzten, sich in Axialrichtung (A) erstreckenden zumindest teilweise umlaufenden Bundabschnitt (44) aufweist, der eine Aufnahmekammer (45) für die umlaufende Dichtung (15, 25) des ersten und/oder zweiten Filterelements (1, 2) mit begrenzt.

5. Filtervorrichtung (100) nach einem der vorigen Ansprüche, wobei die umlaufende Dichtung (15, 25) des ersten und/oder zweiten Filterelements (1, 2) ein Dichtungsprofil (151, 251) aufweist, das radial (R) über den Filtermediumkörper (11, 21) des ersten und/oder zweiten Filterelements (1, 2) auskragt, und/oder der zumindest teilweise umlaufende Bundabschnitt (44) des Adapterrahmens (4) das Dichtungsprofil (151, 251) in Axialrichtung (A) überragt, und/oder der zumindest teilweise umlaufende Bundabschnitt (44) des Adapterrahmens (4) unter einen spitzen Winkel (441) gegenüber der Axialrichtung (A) verläuft.

6. Filtervorrichtung (100) nach einem der vorigen Ansprüche, wobei das erste Gehäuseteil (31) ein Grundgehäuseteil (31) ist und das zweite Gehäuseteil (32) ein abnehmbarer Gehäusedeckel (32), wobei insbesondere in einem bestimmungsgemäßen Benutzungszustand der Filtervorrichtung (100) das Grundgehäuseteil (31) zuunterst angeordnet ist, so dass, ausgehend von dem Grundgehäuseteil (31) in Axialrichtung gesehen, auf das Grundgehäuseteil (31) das erste Filterelement (1), der Adapterrahmen (4), das zweite Filterelement (2) und schließlich der Gehäusedeckel (32) folgt, und wobei optional das erste Filterelement (1) durch Abnehmen des Grundgehäuseteils (31) von unten austauschbar ist und das zweite Filterelement durch Abnehmen des Gehäusedeckels (32) von oben austauschbar ist.

7. Filtervorrichtung (100) nach einem der Ansprüche 5 bis 6, wobei das Dichtungsprofil (151) der umlaufenden Dichtung (15) des ersten Filterelements (1) eine umlaufende Nut (152) aufweist, an deren Nutgrund die umlaufende Gehäusedichtfläche (311) des ersten Gehäuseteils (31) anliegt.

8. Filtervorrichtung (100) nach einem der Ansprüche 5 bis 7, wobei das Dichtungsprofil (251) der umlaufenden Dichtung (25) des zweiten Filterelements (2) eine umlaufende Nut (252) aufweist, an deren Nutgrund die erste umlaufende Dichtfläche (41) des Adapterrahmens (4) anliegt.

9. Filtervorrichtung (100) nach einem der Ansprüche 7 oder 8, wobei das Dichtungsprofil (151) der umlaufenden Dichtung (15) des ersten Filterelements (1) eine der umlaufenden Nut (152) abgewandte Axialdichtfläche (153) aufweist, an der die zweite Dichtfläche (42) des Adapterrahmens (4) anliegt.

10. Filtervorrichtung (100) nach einem der Ansprüche 8 oder 9, wobei das Dichtungsprofil (251) der umlaufenden Dichtung (25) des zweiten Filterelements (2) eine der umlaufenden Nut (252) abgewandte Axialdichtfläche (253) aufweist, an der die umlaufende Gehäusedichtfläche (321) des zweiten Gehäuseteils (32) anliegt.

11. Filtervorrichtung (100) nach einem der vorigen Ansprüche, wobei die Filtervorrichtung (100) eine Verbindungsvorrichtung (5) aufweist, die das erste Gehäuseteil (31) mit dem zweiten Gehäuseteil (32) verbindet und eine zumindest axial (A) gerichtete Vorspannkraft erzeugt, wobei bevorzugt der Adapterrahmen (4) eine Führungsvorrichtung (52) aufweist, die zur Führung der Verbindungsvorrichtung (5) in zumindest einer Richtung normal zur Axialrichtung (A) mit der Verbindungsvorrichtung (5) gekoppelt ist, und/oder die Verbindungsvorrichtung (5) von der Seite des zweiten Gehäuseteils (32) her zugänglich ist, insbesondere wobei die Verbindungsvorrichtung (5) zumindest eine Schraube (5) umfasst, die mit einem korrespondierenden Gewinde (51) am ersten Gehäuseteil (31) gekoppelt ist.

12. Filtervorrichtung (100) nach einem der vorigen Ansprüche, wobei
- der Filtermediumkörper (11, 21) zumindest eines der Filterelemente (1, 2) ein Partikelfiltermedium aufweist, insbesondere umfassend ein synthetisches Vliesmaterial und/oder ein zellulosebasiertes Filtermedium, wobei insbesondere das Partikelfiltermedium Filtrationsklasse H13 oder H14 nach DIN EN 1822-1 erfüllt, und/oder
- der Filtermediumkörper (11, 21) zumindest eines der Filterelemente (1, 2) ein Gasfiltermedium aufweist, insbesondere umfassend zumindest ein Adsorbens, insbesondere eine Aktivkohle, einen Zeolith und/oder einen Ionentauscher, und wobei optional das zweite Filterelement (2) das Gasfiltermedium aufweist, insbesondere wobei in dem bestimmungsgemäßen Benutzungszustand der Filtervorrichtung (100) das zweite Filterelement (2) nach dem ersten Filterelement (1) durchströmbar ist.

13. Filtervorrichtung (100) nach einem der vorigen Ansprüche, wobei das erste Gehäuseteil (31) und/oder das zweite Gehäuseteil (32) zum Austausch zumindest eines der Filterelemente (1, 2) kollabierbar ausgebildet ist, so dass eine Erstreckung des jeweiligen Gehäuseteils (31, 32) zumindest in oder entgegen der Durchströmungsrichtung (D) reduzierbar ist.

14. Verwendung eines Filterelements (1) umfassend einen Filtermediumkörper (11) und eine diesen umlaufende Dichtung (15) als erstes Filterelement (1) in einer Filtervorrichtung (100) nach einem der vorigen Ansprüche, wobei die umlaufende Dichtung (15) an der zweiten Dichtfläche (42) des Adapterrahmens (4) dichtend anliegt und wobei die umlaufende Dichtung (15) an der umlaufenden Gehäusedichtfläche (311) des ersten Gehäuseteils (31) dichtend anliegt.

15. Verwendung eines Filterelements (2) umfassend einen Filtermediumkörper (21) und eine diesen umlaufende Dichtung (25) als zweites Filterelement (2) in einer Filtervorrichtung (100) nach einem der Ansprüche 1 bis 13, wobei die umlaufende Dichtung (25) an der ersten Dichtfläche (41) des Adapterrahmens (4) dichtend anliegt und wobei die umlaufende Dichtung (25) an der umlaufenden Gehäusedichtfläche (321) des zweiten Gehäuseteils (32) dichtend anliegt.

## Claims

1. A filter device (100), in particular for a cabin air filter system or an intake air filter system of a fuel cell, comprising
- at least two filter elements (1, 2), each comprising a filter medium body (11, 21) and a circumferential seal (15, 25) surrounding it, and
- a filter housing (3) having at least two housing components (31, 32),
- wherein a first housing component (31) features a filter element receiving space (312) in which a first filter element (1) is disposed,
- wherein the first housing component (31) features at least one circumferential housing sealing surface (311) against which a circumferential seal (15) of the first filter element (1) bears in a sealing manner,
- an adapter frame (4) featuring a filter element receiving space (43) in which a second filter element (2) is disposed,
- wherein the adapter frame (4) features at least one first circumferential sealing surface (41) against which a circumferential seal (25) of the second filter element (2) bears in a sealing manner,
- and wherein the adapter frame (4) additionally features a second circumferential sealing surface (42) against which the circumferential seal (15) of the first filter element (1) bears in a sealing manner,
- and wherein a second housing component (32) features a circumferential housing sealing surface (321) against which the circumferential seal (25) of the second filter element (2) bears in a sealing manner.

2. The filter device (100) according to claim 1, wherein the first and second filter elements (1, 2) are sealed indirectly via the adapter frame (4) with respect to the at least two housing components (31, 32).

3. The filter device (100) according to claim 1 or 2, wherein the first circumferential sealing surface (41) of the adapter frame (4) and the second circumferential sealing surface (42) of the adapter frame (4) are spaced apart from each other in the axial direction (A) and are oriented away from one another.

4. The filter device (100) according to one of the preceding claims, wherein the adapter frame (4) features, adjacent to its first and/or second sealing surfaces (41, 42), a radially outwardly offset, at least partially circumferential collar portion (44) extending in the axial direction (A), which defines a receiving chamber (45) for the circumferential seal (15, 25) of the first and/or second filter element (1, 2).

5. The filter device (100) according to one of the preceding claims, wherein the circumferential seal (15, 25) of the first and/or second filter element (1, 2) features a sealing profile (151, 251) projecting radially (R) beyond the filter medium body (11, 21) of the first and/or second filter element (1, 2), and/or the at least partially circumferential collar portion (44) of the adapter frame (4) extends beyond the sealing profile (151, 251) in the axial direction (A), and/or the at least partially circumferential collar portion (44) of the adapter frame (4) extends at an acute angle (441) with respect to the axial direction (A).

6. The filter device (100) according to one of the preceding claims, wherein the first housing component (31) is a basic housing component (31) and the second housing component (32) is a detachable housing cover (32), wherein, in particular, in a state of intended use of the filter device (100), the basic housing component (31) is disposed at the bottom, such that, viewed in the axial direction starting from the basic housing component (31), the basic housing component (31) is followed by the first filter element (1), the adapter frame (4), the second filter element (2), and finally the housing cover (32), and wherein, optionally, the first filter element (1) is replaceable by removing the basic housing component (31) from below, and the second filter element is replaceable by removing the housing cover (32) from above.

7. The filter device (100) according to any one of claims 5 to 6, wherein the sealing profile (151) of the circumferential seal (15) of the first filter element (1) features a circumferential groove (152), against the groove base of which the circumferential housing sealing surface (311) of the first housing component (31) rests.

8. The filter device (100) according to any one of claims 5 to 7, wherein the sealing profile (251) of the circumferential seal (25) of the second filter element (2) features a circumferential groove (252), against the groove base of which the first circumferential sealing surface (41) of the adapter frame (4) rests.

9. The filter device (100) according to any one of claims 7 or 8, wherein the sealing profile (151) of the circumferential seal (15) of the first filter element (1) features an axial sealing surface (153) facing away from the circumferential groove (152), against which the second sealing surface (42) of the adapter frame (4) rests.

10. The filter device (100) according to one of claims 8 or 9, wherein the sealing profile (251) of the circumferential seal (25) of the second filter element (2) features an axial sealing surface (253) facing away from the circumferential groove (252), against which the circumferential housing sealing surface (321) of the second housing component (32) rests.

11. The filter device (100) according to any one of the preceding claims, wherein the filter device (100) features a connection fitting (5) connecting the first housing component (31) to the second housing component (32) and generates a biasing force directed at least axially (A), wherein, preferably, the adapter frame (4) features a guiding device (52) that is coupled to the connection fitting (5) to guide the connection fitting (5) in at least one direction normal to the axial direction (A), and/or the connection fitting (5) is accessible from the side of the second housing component (32), in particular wherein the connection fitting (5) comprises at least one screw (5) coupled to a corresponding thread (51) on the first housing component (31).

12. The filter device (100) according to one of the preceding claims, wherein
- the filter medium body (11, 21) of at least one of the filter elements (1, 2) features a particle filter medium, in particular comprising a synthetic non-woven fabric and/or a cellulose-based filter medium, wherein, in particular, the particle filter medium meets filtration class H13 or H14 according to DIN EN 1822-1, and/or
- the filter medium body (11, 21) of at least one of the filter elements (1, 2) features a gas filter medium, in particular comprising at least one adsorbent, in particular activated carbon, a zeolite, and/or an ion exchanger, and
- wherein, optionally, the second filter element (2) features the gas filter medium, in particular wherein, under the intended operating conditions of the filter device (100), the second filter element (2) is through-flowable after the first filter element (1).

13. The filter device (100) according to one of the preceding claims, wherein the first housing component (31) and/or the second housing component (32) is designed to be collapsible for replacing the at least one of the filter elements (1, 2), such that the length of the respective housing component (31, 32) can be reduced at least in or against the through-flow direction (D).

14. A use of a filter element (1) comprising a filter medium body (11) and a circumferential seal (15) surrounding the same as a first filter element (1) in a filter device (100) according to one of the preceding claims, wherein the circumferential seal (15) bears sealingly against the second sealing surface (42) of the adapter frame (4) and wherein the circumferential seal (15) bears sealingly against the circumferential housing sealing surface (311) of the first housing component (31).

15. The use of a filter element (2) comprising a filter medium body (21) and a circumferential seal (25) surrounding the same as a second filter element (2) in a filter device (100) according to any one of claims 1 to 13, wherein the circumferential seal (25) bears sealingly against the first sealing surface (41) of the adapter frame (4) and wherein the circumferential seal (25) bears sealingly against the circumferential housing sealing surface (321) of the second housing component (32).

## Revendications

1. Dispositif de filtre (100), en particulier d'un système de filtre à air d'habitacle ou d'un système de filtre à air d'aspiration d'une pile à combustible, comprenant
- au moins deux éléments de filtre (1, 2), chacun d'entre eux comprenant un corps de milieu filtrant (11, 21) et un joint périphérique (15, 25) autour de ce corps, et
- un boîtier de filtre (3) avec au moins deux composant de boîtier (31, 32),
- un premier composant de boîtier (31) présentant un compartiment de réception d'élément de filtre (312) dans lequel est disposé un premier élément de filtre (1),
- le premier composant de boîtier (31) présentant au moins une surface d'étanchéité de boîtier périphérique (311) contre laquelle un joint périphérique (15) du premier élément de filtre (1) s'applique d'une manière étanche,
- un cadre adaptateur (4) qui présente un compartiment de réception d'élément de filtre (43) dans lequel est disposé un deuxième élément de filtre (2),
- le cadre adaptateur (4) présentant au moins une première surface d'étanchéité périphérique (41) contre laquelle un joint périphérique (25) du deuxième élément de filtre (2) s'applique d'une manière étanche,
- et le cadre adaptateur (4) présentant également une deuxième surface d'étanchéité périphérique (42) contre laquelle le joint périphérique (15) du premier élément de filtre (1) s'applique d'une manière étanche,
- et un deuxième composant de boîtier (32) présentant une surface d'étanchéité de boîtier périphérique (321) contre laquelle le joint périphérique (25) du deuxième élément de filtre (2) s'applique d'une manière étanche.

2. Dispositif de filtre (100) selon la revendication 1, le premier et le deuxième éléments de filtre (1, 2) étant étanchés directement par l'intermédiaire du cadre adaptateur (4) par rapport aux au moins deux composants de boîtier (31, 32).

3. Dispositif de filtre (100) selon la revendication 1 ou 2, la première surface d'étanchéité périphérique (41) du cadre adaptateur (4) et la deuxième surface d'étanchéité périphérique (42) du cadre adaptateur (4) étant espacées l'une de l'autre en sens axial (A) et orientées en sens inverses l'une de l'autre.

4. Dispositif de filtre (100) selon l'une quelconque des revendications précédentes, le cadre adaptateur (4) qui avoisine la première et/ou deuxième surface d'étanchéité périphérique (41, 42) dudit cadre présentant une section à collet (44) au moins partiellement périphérique, décalée vers l'extérieur en sens radial et évoluant en sens axial (A) qui limite aussi une chambre de réception (45) pour le joint périphérique (15, 25) du premier et/ou du deuxième élément de filtre (1, 2).

5. Dispositif de filtre (100) selon l'une quelconque des revendications précédentes, le joint périphérique (15, 25) du premier et/ou du deuxième élément de filtre (1, 2) présentant un profil d'étanchéité (151, 251) qui fait saillie en sens radial (R) du corps de milieu filtrant (11, 21) du premier et/ou du deuxième élément de filtre (1, 2), et/ou la section à collet (44) au moins partiellement périphérique du cadre adaptateur (4) dépassant du profil d'étanchéité (151, 251) en sens axial (A), et/ou la section à collet (44) au moins partiellement périphérique du cadre adaptateur (4) évoluant selon un angle aigu (441) par rapport au sens axial (A).

6. Dispositif de filtre (100) selon l'une quelconque des revendications précédentes, le premier composant de boîtier (31) étant un composant de boîtier de base (31) et le deuxième composant de boîtier (32) étant un couvercle de boîtier amovible (32), en particulier, dans un état d'utilisation conforme à l'usage correct du dispositif de filtre (100), le composant de boîtier de base (31) étant disposé tout en bas, de telle manière que, considéré en sens axial depuis le composant de boîtier de base (31), le composant de boîtier de base (31) soit suivi du premier élément de filtre (1), du cadre adaptateur (4), du deuxième élément de filtre (2) et, finalement, du couvercle de boîtier (32), et, en option, le premier élément de filtre (1) pouvant être échangé par le bas en retirant le composant de boîtier de base (31) et le deuxième élément de filtre pouvant être échangé par le haut en retirant le couvercle de boîtier (32).

7. Dispositif de filtre (100) selon l'une quelconque des revendications 5 à 6, le profil d'étanchéité (151) du joint périphérique (15) du premier élément de filtre (1) présentant une rainure périphérique (152) contre le fond de laquelle la surface d'étanchéité de boîtier périphérique (311) de du premier composant de boîtier (31) s'applique.

8. Dispositif de filtre (100) selon l'une quelconque des revendications 5 à 7, le profil d'étanchéité (251) du joint périphérique (25) du deuxième élément de filtre (2) présentant une rainure périphérique (252) contre le fond de laquelle la première surface d'étanchéité périphérique (41) du cadre adaptateur (4) s'applique.

9. Dispositif de filtre (100) selon l'une quelconque des revendications 7 ou 8, le profil d'étanchéité (151) du joint périphérique (15) du premier élément de filtre (1) présentant une surface d'étanchéité axiale (153) dirigée à l'opposé de la rainure périphérique (152) contre laquelle la deuxième surface d'étanchéité (42) du cadre adaptateur (4) s'applique.

10. Dispositif de filtre (100) selon l'une quelconque des revendications 8 ou 9, le profil d'étanchéité (251) du joint périphérique (25) du deuxième élément de filtre (2) présentant une surface d'étanchéité axiale (253) dirigée à l'opposé de la rainure périphérique (252) contre laquelle la surface d'étanchéité de boîtier périphérique (321) du deuxième composant de boîtier (32) s'applique.

11. Dispositif de filtre (100) selon l'une quelconque des revendications précédentes, le dispositif de filtre (100) présentant un dispositif de raccordement (5) reliant le premier composant de boîtier (31) au deuxième composant de boîtier (32) et génère une force de précontrainte agissant au moins en sens axial (A), le cadre adaptateur (4) présentant de préférence un dispositif de guidage (52) qui est relié au dispositif de raccordement (5) afin de guider le dispositif de raccordement (5) au moins dans une direction normale par rapport au sens axial (A), et/ou le dispositif de raccordement (5) étant accessible depuis le côté du deuxième composant de boîtier (32), en particulier le dispositif de raccordement (5) comprenant au moins une vis (5) reliée à un filet (51) correspondant du premier composant de boîtier (31).

12. Dispositif de filtre (100) selon l'une quelconque des revendications précédentes,
- le corps de milieu filtrant (11, 21) d'au moins l'un des éléments de filtre (1, 2) présentant un milieu filtrant à particules, en particulier comprenant un matériau non-tissé synthétique et/ou un milieu filtrant à base de cellulose, en particulier le milieu filtrant à particules étant conforme à la classe de filtration H13 ou H14 conformément à **DIN EN** 1822-1, et/ou
- le corps de milieu filtrant (11, 21) d'au moins l'un des éléments de filtre (1, 2) présentant un milieu filtrant de gaz, en particulier comprenant un adsorbant, en particulier un charbon actif, une zéolithe et/ou un échangeur d'ions, et, en option, le deuxième élément de filtre (2) présentant le milieu filtrant de gaz, en particulier, dans l'état d'utilisation conforme à l'usage correct de l'élément de filtre (100), le deuxième élément de filtre (2) pouvant être traversé après le premier élément de filtre (1).

13. Dispositif de filtre (100) selon l'une quelconque des revendications précédentes, le premier composant de boîtier (31) et/ou le deuxième composant de boîtier (32) étant conçu de manière repliable en vue de l'échange d'un des éléments de filtre (1, 2), de sorte qu'une extension du composant de boîtier (31, 32) respective puisse être réduite au moins dans la direction d'écoulement ou dans le sens opposé à l'écoulement (D).

14. Utilisation d'un élément de filtre (1) comprenant un corps de milieu filtrant (11) et un joint périphérique (15) autour de ce corps en tant que premier élément de filtre (1) dans un dispositif de filtre (100) selon l'une quelconque des revendications précédentes, le joint périphérique (15) s'appliquant de manière étanche contre la deuxième surface d'étanchéité (42) du cadre adaptateur (4), et le joint périphérique (15) s'appliquant de manière étanche contre la surface d'étanchéité de boîtier périphérique (311) du premier composant de boîtier (31).

15. Utilisation d'un élément de filtre (2) comprenant un corps de milieu filtrant (21) et un joint périphérique (25) autour de ce corps en tant que deuxième élément de filtre (2) dans un dispositif de filtre (100) selon l'une quelconque des revendications 1 à 13, le joint périphérique (25) s'appliquant de manière étanche contre la première surface d'étanchéité (41) du cadre adaptateur (4), et le joint périphérique (25) s'appliquant de manière étanche contre la surface d'étanchéité de boîtier périphérique (321) de la deuxième partie de boîtier (32).
